# EUROPEAN PATENT APPLICATION

(11) **EP 3 192 929 A1**
(43) Date of publication of application: **19.07.2017**
(21) Application number: 16150928.6
(22) Date of filing: 12.01.2016
(51) Int. Cl.: E03B 1/04

(54) **SHOWER SYSTEM**

(71) Applicant: Hamwells Holdings BV, 6827 AB Arnhem (NL)
(72) Inventor: CHÖMPFF, Robbert Thomas, 6865 CR Doorwerth (NL)
(74) Representative: De Vries & Metman

(57) **Abstract**

The invention relates to a shower system provided with

- a collecting system (3) provided with a drain for draining off showering liquid originating from a shower floor (2) from the shower system;
- a recirculation system set up to collect the showering liquid by way of a recirculation hole and recirculate it to a user, wherein

the shower system is provided with
- a screening-off mechanism (5, 4, 7) set up to selectively keep the recirculation hole of the recirculation system out of reach of the showering liquid originating from the shower floor (2) and to expose it to showering liquid originating from the shower floor (2).

## Description

Shower system provided with:
- a collecting system provided with a drain for draining off showering liquid originating from a shower area from the shower system;
- a recirculation system set up to collect the showering liquid by way of a recirculation hole and recirculate it to a user.

In US5353448 a shower system user is standing on a horizontal shower floor in which a collecting system has been provided. The shower system is set up to clean a user during a first phase with a continuous stream of fresh, hot water and, during a second phase, to offer the user a comfort shower with recirculated water. In the floor also a recirculation hole is provided. Water reaching the recirculation hole flows into the recirculation hole.

During the first phase of use of the shower system, the water drains off through the collecting system. A continuous stream of fresh, heated water issues from the shower head.

By using a control member during the shower which closes or raises the access to the collecting system, the access to the collecting system for the water originating from the floor is raised, thus taking it out of reach of said water unless it is at a very high level on the horizontal floor. As a result of this water collects on the floor during the second phase. The collected water is sprayed by way of the recirculation hole, with a pump in a recirculation system, over the user by way of a shower head.

In this shower system the recirculation system can come into contact with water contaminated with, for instance, soap, hair and dirt originating from the user's body during the first phase. As a result, users find the use of the recirculation system unpleasant, because water to be recirculated by it can become contaminated and consequently the user can be sprayed with contaminated water.

The technical problem is to provide a shower system where the recirculation system is not contaminated when recirculation starts.

The problem is solved by a shower system provided with:
- a collecting system provided with a drain for draining off showering liquid originating from a shower floor from the shower system;
- a recirculation system set up to collect the showering liquid by way of a recirculation hole and recirculate it to the user;
characterised by
- a screening-off mechanism set up to keep the recirculation hole of the recirculation system out of reach of the showering liquid originating from the shower floor or to expose it to showering liquid originating from the shower floor.

By keeping the recirculation hole out of reach of the showering liquid, contaminated showering liquid is prevented from entering the recirculation system by way of the recirculation hole. As a result, the recirculation system remains clean and is not contaminated when recirculation starts.

The presence of the drain makes it possible for excess showering liquid to be drained from the shower system.

In an embodiment there is provided a shower system according to the invention, wherein
- the recirculation system comprises an inlet section provided with the recirculation hole; and
- the screening-off mechanism is set up to move the inlet section between a draining position and a recirculation position vis-'a-vis the shower floor such that
- in the recirculation position the showering liquid can flow from the shower floor to the adjacent inlet section; and
- in the draining position there is an area between the shower floor and the inlet section, wherein the area is in communication with the drain.

By using the inlet section in the draining position of the screening-off mechanism, showering liquid will enter the area between the shower floor and the inlet section. Because this area is in communication with the drain, the showering liquid will be drained off.

By using the inlet section in the recirculation position of the screening-off mechanism, wherein the inlet section is adjacent to the shower floor, showering liquid can be introduced into the recirculation system by way of the recirculation hole.

In this process with the screening-off mechanism in the draining position and the recirculation position in the same way, the showering liquid can flow towards the collecting system. It thus is not necessary to create a basin of showering liquid with the shower floor as bottom, as in the prior art, in order to get the showering liquid to the recirculation system.

In an embodiment the collecting system is provided with a connecting edge arranged to be adjacent to the shower floor during use and the screening-off mechanism is provided with means to rotate the inlet section around an imaginary axis vis-'a-vis the shower floor, wherein the imaginary axis is outside the centre of the perpendicular projection of the recirculation hole on a plane perpendicular to the imaginary axis, and the connecting edge surrounds the imaginary axis.

Because the imaginary axis is outside the centre of the perpendicular projection and the imaginary axis is surrounded by the connecting edge which during use is adjacent to the shower floor, the distance from the centre of the perpendicular projection of the inlet section to the shower floor changes upon rotation of the inlet section vis-'a-vis the shower floor. In this case the centre of the perpendicular projection of the recirculation hole has coordinates which correspond to the average coordinates of the perpendicular projection. Because the distance varies, there can be an area between the shower floor and the inlet section in the draining position which is not there after rotation to the recirculation position.

Many motors are provided with a driven shaft, so that there is a wide choice when it comes to motors to rotate the inlet section.

It will be clear to the skilled person that the connecting edge in a cross-section perpendicular to the imaginary axis may be, for instance, square, rectangular or circular.

In an embodiment the inlet section is formed by a recirculation reservoir and the recirculation system is provided with an inlet pipe which with an inlet hole is inserted in the recirculation reservoir such that during use the bottom part of the inlet hole is positioned below the lowest level of an upper surface of the shower floor.

Because the recirculation system is provided with an inlet pipe which has an inlet hole inserted in the recirculation reservoir, the recirculation system is able to take showering liquid from the recirculation reservoir.

Because the bottom part of the inlet hole during use, i.e. in an orientation of the shower system associated with being in use, is positioned below the lowest level of an upper surface of the shower floor, the recirculation system is able to process a constant volume of showering liquid. For the level of the showering liquid in the recirculation reservoir is mainly determined by the influx of showering liquid and the outflux of showering liquid. The influx is not very dependent on movements by the user, even if said user were to stand on the shower floor. This contrasts with the prior art, where the user is standing on the shower floor and where the shower floor has to form the bottom of a layer of showering liquid in which the user is standing. Movement of the user's feet in that case will cause an irregular height of the level of the showering liquid, as a result of which an irregular volume of showering liquid is recirculated.

Because the showering liquid to be recirculated is taken from the recirculation reservoir, also a large output can be achieved. This is because the surface area of the recirculation reservoir can be selected irrespective of the dimensions of the shower floor. If the recirculation reservoir has a large surface area, the showering liquid level in the recirculation reservoir will be low and hence it will take a greater effort to pump the showering liquid out of it and thus the output will be limited. In the case of a small recirculation reservoir surface area the showering liquid to be recirculated will have a relatively high level in the recirculation reservoir in the event of equal influx and outflux, as a result of which it will take less effort to pump the showering liquid out of it, as a result of which the output can be higher.

Furthermore, relatively little heat will leak away from a small recirculation reservoir compared with a large recirculation reservoir.

In the case of a recirculation system it is advantageous to achieve a large output, because that way the showering liquid to be recirculated can be filtered or purified more frequently.

In a further embodiment of the shower system
- the connecting edge is annular and the connecting edge is provided with an circular hole; and
- the imaginary axis coincides with the axis of symmetry of the circular hole.

Because the hole of the connecting edge is circular and the imaginary axis intersects the centre of the hole of the connecting edge because the imaginary axis coincides with the axis of symmetry, the distance between the inlet section and the connecting edge remains the same in all rotational orientations. As a result only a small area is required for installing the collecting system with connecting edge and the recirculation reservoir.

In a further embodiment of the shower system the imaginary axis intersects the perpendicular projection of the recirculation hole.

Because the imaginary axis intersects the perpendicular projection, it is possible to keep the inlet pipe in its place when the screening-off mechanism rotates the recirculation reservoir around the imaginary axis between the draining position and the recirculation position.

Because the inlet pipe can retain its place and therefore does not have to be removed or bent aside, there is a great deal of freedom when it comes to selecting the properties of the inlet pipe.

In a further embodiment of the shower system the perpendicular projection of the recirculation hole has the shape of a circular segment with a circular arc of which the outer diameter corresponds to the inner diameter of the connecting edge.

Because the outer diameter of the circular arc corresponds to the inner diameter of the circular hole of the connecting edge, showering liquid can reach the recirculation reservoir from the shower floor over a relatively long section of the connecting edge, as a result of which there is a great deal of freedom when it comes to selecting the shape of the shower floor.

In a further embodiment of the shower system the recirculation reservoir is provided with an overflow wall with a top edge which during use is higher than the bottom section of the inlet hole and bounds on the area.

Because the top edge of the overflow wall during use, i.e. in an orientation of the shower system associated with being in use, is higher than the bottom part of the inlet hole, the showering liquid will flow over the top edge during use when there is too much showering liquid in the recirculation reservoir. Because the edge bounds on the area which is in communication with the drain, the showering liquid which has flowed over the top edge will be drained off.

It will be clear to the skilled person that in an advantageous embodiment the top edge is lower during use than the connecting edge.

As a result, showering liquid can already be drained off by way of the drain by taking the short and direct route from the overflowing of the overflow wall. Showering liquid once it has wound up in the recirculation reservoir as a result will no longer have to leave the collecting system to enable it to be drained off when the level in the recirculation reservoir becomes too high.

In a further embodiment the invention provides a shower system arranged such that during use
- the connecting edge along a boundary bounds on the shower floor; and
- the connecting edge along the boundary is lower than the shower floor along the boundary.

Because during use, i.e. after installation, in an orientation of the shower system associated with use, the connecting edge along the boundary is lower than the shower floor along the boundary, the showering liquid can already be taken from the shower floor across the connecting edge without showering liquid accumulating outside the collecting system until the level of the connecting edge along the boundary is reached.

In a further embodiment of the shower system
- a perpendicular projection of the area on the plane has the shape of a further circular segment and
- an additional perpendicular projection of the overflow wall on the plane together with the perpendicular projection of the area and the perpendicular projection of the recirculation reservoir has the shape of a first circle the centre of which is intersected by the imaginary axis and
- the recirculation reservoir, the area and the overflow wall are set up to be jointly rotated around the imaginary axis.

Because the recirculation reservoir, the area and the overflow wall are set up to be jointly rotated around the imaginary axis, these three elements (recirculation reservoir, area and overflow wall) require an operating area determined by the member at the furthest distance from the imaginary axis. Because the perpendicular projections jointly describe a first circle the centre of which is intersected by the imaginary axis, the operating area is used effectively. Because the operating area is used effectively, there also is little risk of dirt accumulating in the system. Moreover, the operating area can stay small, so that the shower system requires little space and so can be used and installed in many cases.

In a further embodiment of the shower system, the recirculation reservoir, the area and the overflow wall can be rotatably driven with a motor the position of the perpendicular projection of which on the plane is outside the circle.

Because the perpendicular projection of the motor is outside the first circle, driving of the recirculation reservoir, the area and the overflow wall can be done with a limited installation depth along the imaginary axis.

In a further embodiment of the shower system, the recirculation reservoir is provided with a closable hole leading to the drain.

Because the recirculation reservoir is provided with a closable hole, the showering liquid which is in the recirculation reservoir can be drained off to the drain by hole the closable hole, for instance at the end of a shower.

Because the inlet pipe has its inlet hole inserted in the recirculation reservoir, the inlet pipe insofar as it is positioned higher than the inlet hole will also drain by way of the recirculation reservoir. This is advantageous when it comes to preventing favourable conditions for legionella bacteria.

Preferably, the further embodiment of the shower system according to the invention is provided with a control device set up to let fresh showering liquid run to the recirculation reservoir by way of the inlet pipe.

By letting fresh showering liquid run to the recirculation reservoir by way of the inlet pipe, the inlet pipe and the inlet section can be rinsed out, for instance immediately before use.

In an embodiment the control device is also set up to carry the fresh showering liquid to the user.

Preferably, the control device is provided with a pump and a recirculation pipe which is downstream of the pump during recirculation, and the control device is set up to let the fresh showering liquid run to the inlet pipe by way of the recirculation pipe.

When the fresh showering liquid runs to the inlet pipe by way of the recirculation pipe, it also passes the pump, because it is upstream of the recirculation pipe during recirculation. By letting the fresh showering liquid run by way of the recirculation pipe and the pump, they are rinsed out as well.

Preferably, the closable hole is to be opened when the recirculation hole is kept out of reach of the showering liquid originating from the shower floor.

As a result of this, any dirt originating from the shower floor cannot enter the recirculation system by way of the recirculation hole, making the rinsing even more effective. Moreover, the showering liquid which is sent to the recirculation reservoir by the control device can also run away by way of the drain, so that the rinsing has even greater effect. This embodiment is advantageous irrespective of the presence of a pump and recirculation pipe.

In a further embodiment van the invention, the control device is set up to open the drain valve and the closable hole and let the fresh showering liquid run to the recirculation reservoir and the drain by way of the inlet pipe until the temperature of the fresh showering liquid exceeds a threshold.

This makes for effective use of the fresh showering liquid to rinse the inlet pipe and the recirculation reservoir, where otherwise the showering liquid would have been drained off without any further use.

In a further embodiment of the invention, the shower system is provided with a vent valve and the control device is set up
- to close the drain valve and the closable hole after the temperature of the fresh showering liquid has reached the threshold and to fill the inlet pipe before recirculated showering liquid is recirculated to the user, with the vent valve being in open communication with the inlet pipe while the inlet pipe is filled.

By closing the drain valve and the closable hole and having the vent valve in open communication with the inlet pipe when the fresh showering liquid has heated up, the recirculation system is filled with heated up showering liquid and is able, when the recirculation system is switched on, to quickly supply recirculated showering liquid which is also hot. Were the recirculation system not filled, the stream of recirculated liquid could be irregular.

In a further embodiment there is provided the shower system wherein the closable hole is put in a wall between the recirculation reservoir and the area, and wherein the shower system is provided with a plug (100) in the recirculation reservoir with an outside wall (101) of which the projection on the plane forms an additional circular arc which circumscribes an angle of at most 180 degrees, wherein the inlet section, the area and the wall rotate around the imaginary axis and the plug (100) upon rotation of the inlet section between the draining position and the recirculation position and wherein the wall in the recirculation position seals the closable hole.

Because the plug does not rotate with the wall but does close the closable hole in the recirculation position and the circular arc circumscribes at most 180 degrees, the closable hole will not close in the draining position. Because the projection forms an additional circular arc, the closable hole can rotate across the plug between the draining position and the recirculation position without the plug impeding the movement of the wall.

Because the closable hole is located in the wall, no area is needed immediately below the recirculation reservoir to let the showering liquid drain off by way of the closable hole. As a result of this, a low installation height can be achieved. By having the drain pass by way of the area and using the plug which does not constitute a moving part, few parts are needed, which contributes to the reliability of the shower system and to low manufacturing costs.

In a further embodiment there is provided the shower system wherein the dividing wall forms the wall between the recirculation reservoir and the area.

As a result of this, the largest dividing wall possible can be made, to give the greatest possible capacity for processing an excess of showering liquid and draining it off to the drain.

In a further embodiment there is provided the shower system of the invention wherein
- the recirculation system comprises an inlet section provided with the recirculation hole; and
- the screening-off mechanism is set up to move the inlet section between a draining position and a recirculation position such that during use
- in the recirculation position the showering liquid can flow from the shower floor into the recirculation hole; and
- in the draining position the lowest part of the recirculation hole is positioned above the shower floor.

Because in the recirculation position the showering liquid can flow into the recirculation hole, the recirculation position can be used to recirculate showering liquid.

Because in the draining position the lowest part of the recirculation hole is positioned above the shower floor, showering liquid cannot enter the inlet section and be put into recirculation.

The position of the lowest part of the recirculation hole can be changed for instance by moving the inlet section in the z-direction. The position of the last part of the recirculation hole can also be changed for instance by suspending the inlet section from two arms and rotating those.

In an advantageous embodiment in the draining position the path from the shower floor to the drain is open to free flow.

As a result of this, showering liquid will not accumulate above the shower floor, hence no showering liquid will be able to flow into the recirculation hole due to accumulation either.

In a further embodiment there is provided the shower system of the invention wherein
- the recirculation system comprises an inlet section provided with the recirculation hole; and
- the screening-off mechanism is provided with a cover which closes the recirculation hole in a draining position and leaves the recirculation hole clear in a recirculation position.

By closing the recirculation hole with a cover in the event of contaminated showering liquid flowing off the shower floor, it is prevented that contaminated showering liquid enters the recirculation circuit.

The cover can for instance be a hinged cover or a sliding cover.

In a further embodiment there is provided the shower system of the invention wherein the shower system is provided with a supply for fresh showering liquid and is set up to supply the fresh showering liquid to the user.

Because the shower system can also supply fresh showering liquid to the user, the shower system is suitable not only for recirculating showering liquid, but also for showering with fresh showering liquid.

Below examples of embodiments according to the invention will be described with reference to the attached schematic figures. In the figures corresponding reference symbols refer to corresponding parts. The parts are not necessarily provided with a reference symbol in all figures. The schematic figures are not necessarily made to scale and some features may have been exaggerated for better illustration and explanation of the invention. In the description of the examples use is made of a Cartesian coordinate system with coordinate axes in a x-direction, a y-direction and a z-direction in a right-handed orientation. The positive z-direction is used for a vertical, upward direction, i.e. the negative z-direction is the direction on which gravity acts. The orientation in which the negative z-direction is the direction on which gravity acts is an orientation in which the shower system can be used.

By showering liquid is meant here, a liquid intended for showering. This may be tap water, in which case tap water may be made up of water with added chlorine. Alternatively, medication may have been added or the showering liquid may even consist entirely of a medicinal liquid, for instance for application to the skin.

Incidentally, there has been no attempt to present the examples as an exhaustive list of examples or to limit the invention in any other way to the precise configurations as shown in the figures or described in the detailed description below.
Figure 1 is a depiction in top view of a shower system according to the invention in a shower room
Figure 2 is a depiction in lateral cross-section of a shower system according to the invention
Figure 3 is a depiction in lateral cross-section of a second example of a shower system according to the invention.

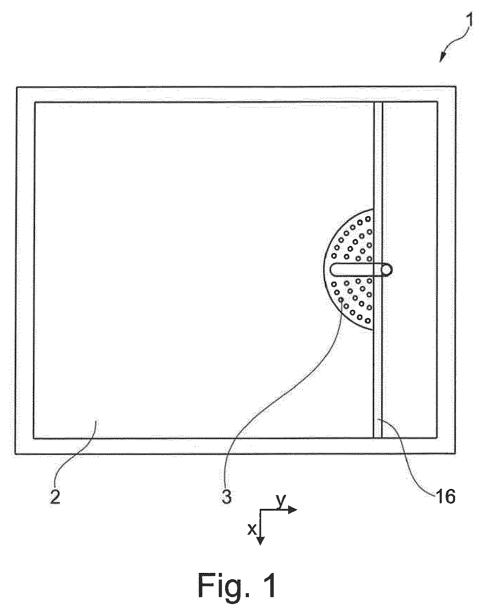

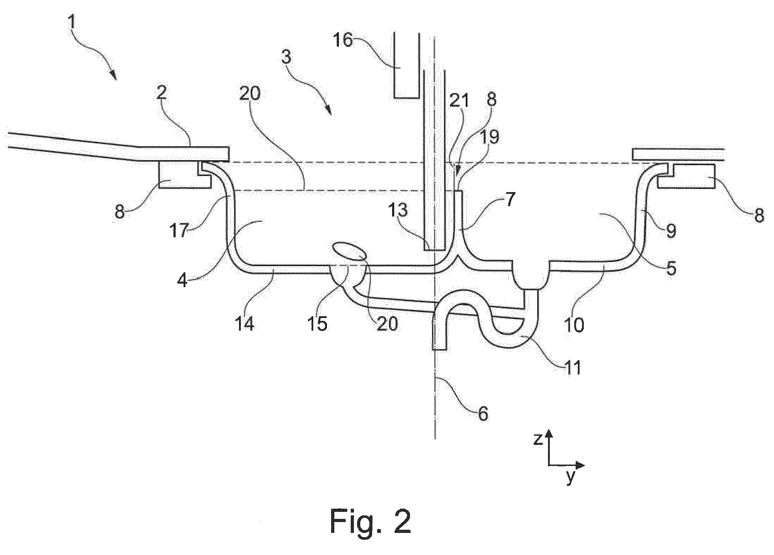

In an example of a shower system according to the invention installed in a shower room, the shower system comprises a shower head suspended in the shower room. The shower room is provided with a shower floor on which a user can stand and on which water that has been sprayed over or alongside the user is collected. The shower floor has an upper surface which during use is directed upwards (Figures 1 and 2). The shower head is connected by way of an intermediate pipe to a first pipe which can supply fresh water, i.e. a supply of fresh showering liquid. Between the intermediate pipe and the first pipe a tap is provided with which the temperature of the fresh water can be controlled by mixing cold and hot fresh water and with which furthermore the volume of fresh water can be controlled. The tap is a thermostatically controlled tap, so that a set temperature will be maintained automatically.

At an edge of the shower floor (2) a collecting system (3) is provided. The collecting system (3) is covered in part with a sheet with holes or slots. The shower floor (2) slopes downwards to the collecting system (3) to ensure a natural slope. In the collecting system (3) there is a recirculation reservoir (4) and an area (5). The recirculation reservoir (4) can be rotated together with the area (5) around an imaginary axis (6).

The imaginary axis (6) goes in the z-direction and lies in the origin of the x-direction and the y-direction.

The perpendicular projection of the recirculation reservoir (4) on a plane perpendicular to the imaginary axis (6), i.e. a plane suspended in the x-direction and the y-direction, is a circular segment with a circular arc having two ends and a chord between the two ends of the circular arc. The perpendicular projection of the area (5) on the plane forms a further circular segment with a further circular arc having two further ends and a further chord between the two further ends of the further circular arc. The area (5) and the recirculation reservoir (4) are separated by an overflow wall (7) which can be rotated together with the recirculation reservoir (4) and hence also with the area (5). Together with an additional perpendicular projection of the overflow wall (7) on the plane the circular segment and the further circular segment form a first circle.

Where mention is made here of the perpendicular projection, this refers to the perpendicular projection of the largest outer diameter.

In addition to being bounded by the overflow wall (7), the area (5) is bounded also by an area wall (9) and a bottom (10). The bottom (10) is provided with a drain (11), which is connected to the sewer.

The collecting system (3) is provided with a connecting edge (8) bounding in part on the shower floor (2). The connecting edge (8) is annular and has a circular hole with an inner diameter the centre of which lies on the imaginary axis (6).

The diameter of the first circle formed by the recirculation reservoir (4), the area (5) and the overflow wall (7) corresponds to the diameter of the circular hole. The diameter of the first circle formed by the recirculation reservoir (4), the area (5) and the overflow wall (7) in that case is slightly larger than the diameter of the circular hole. The connecting edge (8) is of rubber and seals off the connection between the recirculation reservoir (4) or the area (5) to the shower floor depending on the orientation of the recirculation reservoir (4) and the area (5).

The recirculation reservoir (4), the area (5) (and the area wall (9)) and the overflow wall (7) can be enveloped by a belt. The belt will also envelop an electric motor set up to drive the belt.

In an embodiment alternatively a direct drive electric stepper motor can be selected. The position of the electric motor in the perpendicular projection on the plane is outside the first circle, i.e. the x- and y-coordinates of the electric motor are such that they lie outside the first circle. The belt, the electric motor and the rotatable area (5), the overflow wall (7) and the recirculation reservoir (4) are part of a screening-off mechanism which, depending on the situation, screens off the recirculation reservoir (4) from water from the shower floor (2) in order to keep water to be recirculated apart from potentially contaminated water.

The recirculation reservoir (4) forms an inlet section for a recirculation system of the shower system (1). Inserted in the recirculation reservoir (4) is an inlet pipe (12) which rotates around an inlet pipe axis. The imaginary axis (6) passes through the inlet pipe and coincides with the inlet pipe axis, which intersects the origin of the x-direction and the y-direction. The inlet pipe (12) is provided at one end with an inlet hole (13). The inlet hole (13) extends in a plane perpendicular to the z-direction. The inlet hole has a z-coordinate which is greater than the z-coordinate of a bottom (14) of the recirculation reservoir (4) and which is smaller than the smallest z-coordinate of the shower floor sloping down to the collecting system (3). The inlet pipe (12) in this example terminates 2 mm above the bottom (14) of the recirculation reservoir (4).

The inlet pipe (12) is connected at another end with a pump capable of pumping water from the inlet pipe (12) by way of a recirculation pipe to the shower head. Mixing water from the recirculation pipe and fresh water from the first pipe as well as keeping them apart is done in a way known to the skilled person, such as by way of a thermostatically controlled tap for fresh hot water and non-return valves which prevent water flowing back into the first supply pipe under high pressure.

The recirculation reservoir (4) comprises a reservoir wall (17) and a bottom (14). The bottom (14) of the recirculation reservoir (4) is provided with a closable hole (15). The closable hole (15) leads to the drain (11). On the upper side the recirculation reservoir (4) has a recirculation hole. The recirculation hole has been given the largest possible dimensions and is bounded by the reservoir wall (17). At the overflow wall (7) the recirculation hole is bounded by an imaginary surface (21) which extends parallel with the surface of the overflow wall (7) directed towards the recirculation reservoir.

The overflow wall (7) does not pass through the centre of the first circle and the surface area of the circular segment is greater than the surface area of the further circular segment.

The overflow wall (7) has a top edge (19) which is lower than the connecting edge (8), i.e. in the orientation of this example the top edge (19) has a smaller z-coordinate than the connecting edge (8). When the water in the recirculation reservoir (4) rises above the level (20) corresponding to the top edge (19), the water runs off by way of the top edge (19). On either side of the overflow wall (7) there is a connecting wall (18) between the recirculation wall (17), the area wall (9) and the overflow wall (7) These connecting walls (18) ensure that water which flows over the overflow wall (7) does not leave the collecting system (3) by way of the side of the overflow wall between the recirculation wall (17) and the area wall (9).

In the shower room the inlet pipe (12) for the most part and part of the collecting system (3) are concealed behind a shower wall (16). The y-coordinate of the shower wall (16) thus is smaller than the y-coordinate of the inlet pipe (12) and the y-coordinate of the imaginary axis. Insofar as the collecting system (3) projects towards the user from the shower wall (16), it is provided with a sheet with holes or slots, so that the user cannot get caught when the electric motor is running.

The sheet with holes and slots covers the recirculation hole at least in part. The holes provide access to the collecting system (3) for water from the shower floor (2). The sheet can be removed so that access may be gained to the recirculation reservoir (4) or the area (5) if needed. By providing the sheet with a finger slot, the sheet becomes easy to remove.

### Use

### Phase 1

In an example of the use of the shower system, a shower starts with a first phase. In the first phase fresh water flows exclusively. This fresh water is supplied to the recirculation pipe and the pump. For the fresh water the pump is located downstream of the recirculation pipe and upstream of the inlet pipe (12). In the inlet pipe (12) a drain valve is provided. This stays open until the correct supply temperature is reached in a first part of this phase. Also, the closable hole of the recirculation reservoir is open in the first part of this phase. In this first part of phase 1 the inlet pipe (12) and the recirculation reservoir (4) are rinsed out by the fresh water. The state of the closable hole in the drain valve is controlled by a control device.

After that, in a second part of this phase, first the closable hole is closed by the control device. Then the drain valve is closed by the control device. A vent valve provided in the recirculation pipe sees to venting of the recirculation system and is in open communication with the inlet pipe. To this end the vent valve is opened by the control device. The control device is continuing to send hot water towards the inlet pipe (12).

In this phase the recirculation reservoir (4) is in the furthest possible position from the shower floor (2) (12 o'clock position) and the closable hole of the recirculation reservoir (4) is open.

The area (5) is in the nearest possible position to the shower floor (2) (6 o'clock position).

The first phase has two advantages, viz. that the user is not sprayed with water until after the correct supply temperature has been reached (in phase 2) and that the recirculation pipe and the pump are rinsed out.

The advantage of the second phase is that rapid switching from phase 3 to phase 4 is possible because time to fill the recirculation pipe and the pump is not required.

### Phase 2

When the recirculation pipe is filled, phase 2 starts. In this phase the fresh water is guided exclusively to the shower head by the control device. The orientation of the recirculation reservoir (4) and the area (5) is the same as that of phase 1. The orientation of the recirculation reservoir (4) and the area (5) is controlled in all phases by the control device. Also in this phase the closable hole of the recirculation reservoir is closed by the control device.

In this phase the user washes and the water together with any soap, hairs, perspiration, dirt and the like is drained off directly to the sewer. This phase lasts about 2 minutes.

The drain valve in the inlet pipe (12) in this phase is closed. The vent valve is closed for instance by the control device.

### Phase 3

When the user has washed, the system switches to phase 3. To this end the recirculation reservoir (4), the area (5) and the overflow wall (7) rotate jointly around the imaginary axis (6), such that the recirculation reservoir (4) is as close as possible to the shower floor (2) (is in a 6 o'clock position). In that case the area, seen from the user, is behind the shower wall (16) and in a 12 o'clock position. In this phase the recirculation reservoir (4) fills with water from the shower floor. From the shower head, however, only fresh water continues to flow. The valve in the inlet pipe (12) in this phase is closed.

### Phase 4

The user switches as desired to a luxury shower or other shower head and or massage jets and gets fresh water therefrom for a few seconds. After the water in the recirculation reservoir (4) has reached a sufficiently high level during the showering, the shower system switches such that the pump recirculates water by way of the selected shower head. The valve in the inlet pipe (12) is opened in this phase. In this process the pump pumps water from the recirculation reservoir (4) by way of the inlet pipe (12) to the recirculation pipe. The pump thus is positioned upstream of the inlet pipe (12) and downstream of the recirculation pipe for the recirculated showering liquid. If so desired, fresh water is mixed in, for instance to maintain the water temperature of the water from the shower head.

The recirculation reservoir (4), the area (5) and the overflow wall (7) are in the position in which they were at the end of phase 3.

When the water in the recirculation reservoir (4) comes to be at a higher level than the top edge (19) of the overflow wall (7), the water flows over said top edge (19) into the area (5) and then is drained off directly to the sewer by way of the drain (11). The water can get to be at a higher level than the top edge (19) of the wall (7) in the recirculation reservoir (4) for instance because fresh hot water is mixed in.

On its way from the inlet hole to the shower head the water is exposed to UV light and provided with extra oxygen (vitalised) from an oxygen generator provided in the system in a manner known to the skilled person.

### Phase 5

In this phase the shower ends. The pump stops pumping and the fresh water supply is closed. The valve in the inlet pipe (12) also closes. The recirculation reservoir (4), the area (5) and the overflow wall (7) rotate back to the orientation of phase 1.

In the orientation of phase 1 the closable hole opens. The valve in the inlet pipe (12) opens to allow the remaining water in the recirculation system to drain off to the sewer by way of the inlet hole, the recirculation reservoir (4), the closable hole (15) and the drain (11).

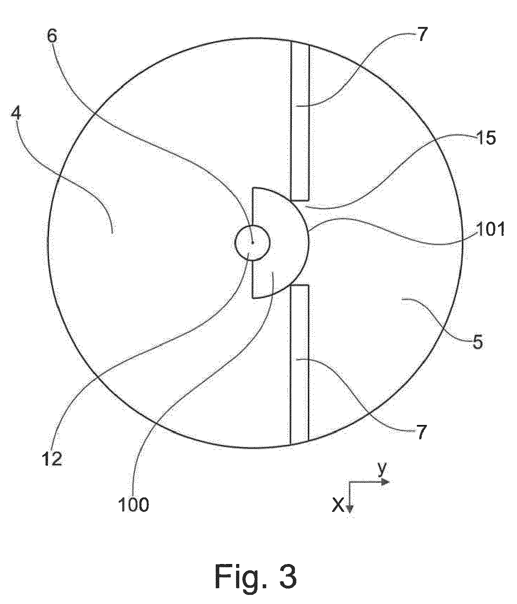

In a second example the overflow wall (7) is provided with the closable hole (15), instead of the bottom (14) as in the first example (Figure 3). The bottom (14) slopes downwards to the closable hole (15) which extends to the bottom (14), such that showering liquid can drain off by way of a natural slope by way of the closable hole when the closable hole is closed.

The inlet pipe (12) is surrounded in part by a plug (100) of rubber which also extends to the bottom (14) of the recirculation reservoir (4). The plug has a bottom surface which follows the bottom (14) of the recirculation reservoir (4), i.e. corresponds thereto. The plug (100) has a fixed position and orientation, that is to say, the plug (100) does not rotate with the recirculation reservoir (4), the overflow wall (7) and the area (5). Upon rotation between the draining position and the recirculation position of the screening-off mechanism, the recirculation reservoir (4), the overflow wall (7) and the area (5) thus do not rotate only around the imaginary axis (6) and the inlet pipe, but also around the plug (100). The plug (100) has an outer wall (101) of which the projection on the plane, which is perpendicular to the imaginary axis (6), forms an additional circular arc covering 180 degrees. The inlet pipe (12) is cylindrical and the plug (100) forms half a ring around the inlet pipe (12). The plug (100) has an upper surface which is perpendicular to the imaginary axis (6). The orientation of the plug (100) is such that the closable hole (15) is closed when the recirculation reservoir is not screened off from showering liquid originating from the shower floor, but in fact is positioned to collect showering liquid from the shower floor.
To ensure proper closing, the closable hole (15) is rectangular.

Because the inlet pipe axis coincides with the imaginary axis (6) and the overflow wall (7) does not pass through the centre of the first circle (because the imaginary axis lies outside the centre of the perpendicular projection of the recirculation hole on the plane) and the surface area of the first circular segment is greater than the surface area of the further circular segment, the plug (100) does not close the closable hole (15) when the recirculation reservoir is oriented such that it is screened off from showering liquid originating from the shower floor because the distance to the closable hole (15) has increased.

In a third example the water of the recirculation system does not flow by way of the shower head, but is sprayed or poured over the user from a separate, luxury, second shower head. In said second example the piping leading to the shower head never gets into contact with recirculated water and the separate, luxury, second shower head never gets into contact with fresh water.

In a fourth example of the invention a recirculation reservoir is also moved. In this case the recirculation reservoir moves forward and backward in a straight line like a drawer.

In a fifth example of the invention a recirculation reservoir is also moved. In this case, however, the recirculation reservoir moves straight up.

In a sixth example of the invention the recirculation reservoir is suspended from two rotatable arms. The arms can be rotated around a joint imaginary axis in the x-direction. As a result of this the recirculation reservoir rotates around the imaginary axis in the x-direction and the recirculation hole of the recirculation reservoir can be given such an orientation and position that the lowest point of the recirculation hole has a greater z-coordinate than the shower floor. In a different orientation and position the recirculation hole is horizontal and the z-coordinate of the recirculation hole is equal to or smaller than the smallest z-coordinate of the shower floor.

## Claims

1. Shower system provided with:
- a collecting system provided with a drain for draining off showering liquid originating from a shower floor from the shower system;
- a recirculation system set up to collect the showering liquid by way of a recirculation hole and recirculate it to a user;
**characterised by**
- a screening-off mechanism set up to keep the recirculation hole of the recirculation system out of reach of the showering liquid originating from the shower floor or to expose it to showering liquid originating from the shower floor.

2. Shower system according to claim 1, wherein
- the recirculation system comprises an inlet section provided with the recirculation hole; and
- the screening-off mechanism is set up to move the inlet section between a draining position and a recirculation position vis-'a-vis the shower floor such that
- in the recirculation position the showering liquid can flow from the shower floor to the adjoining inlet section; and
- in the draining position there is an area between the shower floor and the inlet section, wherein the area is in communication with the drain.

3. Shower system according to claim 2, wherein
- the collecting system is provided with a connecting edge arranged to be adjacent to the shower floor during use; and
- the screening-off mechanism is provided with means to rotate the inlet section around an imaginary axis vis-'a-vis the shower floor, wherein the imaginary axis is outside the centre of the perpendicular projection of the recirculation hole on a plane perpendicular to the imaginary axis and the connecting edge surrounds the imaginary axis.

4. Shower system according to claim 2 or 3, wherein
- the inlet section is formed by a recirculation reservoir; and
- the recirculation system is provided with an inlet pipe which with an inlet hole is inserted in the recirculation reservoir such that during use the bottom part of the inlet hole is positioned below the lowest level of an upper surface of the shower floor.

5. Shower system according to claim 4, wherein
- the connecting edge is annular and is provided with a circular hole;
- the imaginary axis coincides with the axis of symmetry of the circular hole;

6. Shower system according to claim 5, wherein the imaginary axis intersects the perpendicular projection of the recirculation hole.

7. Shower system according to claim 5 or 6, wherein the perpendicular projection of the recirculation hole on the plane has the shape of a circular segment with a circular arc of which the outer diameter corresponds to the inner diameter of the connecting edge.

8. Shower system according to claim 4,5,6 or 7, wherein the recirculation reservoir is provided with an overflow wall with a top edge which during use is higher than the bottom section of the inlet hole and is adjacent to the area.

9. Shower system according to claim 8, set up such that during use
- the connecting edge along a boundary bounds on the shower floor; and
- the connecting edge along the boundary is lower than the shower floor along the boundary.

10. Shower system according to claim 8 or 9, wherein
- a further perpendicular projection of the area on the plane has the shape of a further circular segment; and
- an additional perpendicular projection of the overflow wall on het plane together with the perpendicular projection of the area and the perpendicular projection of the recirculation reservoir has the shape of a first circle of which the centre is intersected by the imaginary axis; and
- the recirculation reservoir, the area and the overflow wall are set up to be jointly rotated around the imaginary axis.

11. Shower system according to claim 10, wherein the recirculation reservoir, the area and the overflow wall can be rotatably driven with a motor the position of the perpendicular projection of which on the plane is outside the circle.

12. Shower system according to any of claims 4 through 11, wherein the recirculation reservoir is provided with a closable hole leading to the drain.

13. Shower system according to claim 1, wherein
- the recirculation system comprises an inlet section provided with the recirculation hole; and
- the screening-off mechanism is set up to move the inlet section between a draining position and a recirculation position such that during use
- in the recirculation position the showering liquid from the shower floor can flow into the recirculation hole; and
- in the draining position the lowest part of the recirculation hole is above the shower floor.

14. Shower system according to claim 1, wherein
- the recirculation system comprises an inlet section provided with the recirculation hole; and
- the screening-off mechanism is provided with a cover which in a draining position closes the recirculation hole and in a recirculation position leaves the recirculation hole clear.

15. Shower system according to any one of the preceding claims, provided with a supply for fresh showering liquid and set up to supply the fresh showering liquid to the user.
